# EUROPEAN PATENT APPLICATION

(11) **EP 2 000 965 A2**
(43) Date of publication of application: **10.12.2008**
(21) Application number: 08009392.5
(22) Date of filing: 21.05.2008
(51) Int. Cl.: G06Q 10/00

(54) **Flow process execution method, apparatus and program**

(30) Priority: 07.06.2007 JP 2007152124
(71) Applicant: Canon Kabushiki Kaisha, Ohta-ku Tokyo (JP)
(72) Inventor: Tsukikawa, Takenori, Tokyo (JP)
(74) Representative: Weser, Wolfgang

(57) **Abstract**

A flow process executing apparatus receives an instruction specifying a position in a first flow process description document. When the process reaches the specified position during execution of a flow process in accordance with the first flow process description document, the flow process executing apparatus stops the flow process in accordance with the first flow process description document, and resumes the stopped flow process in accordance with a second flow process description document.

## Description

### BACKGROUND OF THE INVENTION

### Field of the Invention

The present invention relates to a method, apparatus and program for executing a flow process.

### Description of the Related Art

A serial flow of operation or tasks is called a "workflow". Similarly, a process that sequentially executes the workflow is called a "flow process". Flow processes have been automated using computers and computer networks to allow information and operations to flow smoothly to support business activities.

For example, improved business efficiency can be achieved by converting documents that were circulated among specific departments or members of a company into electronic formats and communicating that information through computer networks. With the recent emergence of web service technologies in addition to computers and computer networks, the range of application areas for flow processes is expanding.

For the flow process, it is necessary to define, in advance, a flow process description document that specifies to which members the information is to be transmitted for processing. In the flow process automated by a computer and a computer network, the flow process description document is loaded into a flow process executing apparatus that can analyze the process description document to implement the flow process.

In a flow process described above, BPEL4WS (Business Process Execution Language for Web Services) is widely used as a language for writing flow process description documents.

BPEL4WS is a flow process description language written in XML (extensible Markup Language). The specification of BPEL4WS is managed by the OASIS Web Service Business Process Execution Language TC of OASIS (the Organization for the Advancement of Structured Information Standards).

BPEL4WS uses WSDL (Web Service Description Language) as an interface that identifies a web service. WSDL is a language used to write web service interfaces, and its specification has been made public by the WWW consortium (W3C). The content can be viewed at http://www.w3.org/TR/wsdl.

In the description given below, the flow process is assumed to be automated using a computer, a computer network, and a web service technology.

When executing the flow process using a flow process description document, the flow process executing apparatus cannot execute a process that is not written in the flow process description document, and cannot temporarily execute a different flow process by linking it to the flow process. For this reason, when executing a process that is not written in the flow process description document, or executing a different flow process by linking the different flow process to the flow process, a problem arises that the flow process description document has to be rewritten, even if temporarily. Further, when attempting to write a flow process description document in light of various possible situations, another problem arises that the resulting flow process description document will be complicated because many conditional statements are used.

In order to solve the above problems, there is a technique for dynamic switching of a flow process. This is disclosed in, for example, Japanese Patent Laid-Open No. 2004-361993. According to this technique, a flow process is defined in advance by dividing it into an upper level flow process that defines the flow of semantic processing, and a lower level flow process that defines the methods for implementing the individual processes. The upper level flow process invokes a necessary flow from the lower level flow process as necessary. Thereby, an entire flow process is formed.

However, the conventional method as disclosed in Japanese Patent Laid-Open No. 2004-361993 requires a flow process description document that is specifically designed for dynamic switch. For this reason, the existing flow process description documents that are not specifically designed for dynamic switch cannot dynamically switch the flow process.

Another example is disclosed in Japanese Patent Laid-Open No. 2006-302032. According to this disclosed technique, if an exception occurs during the execution of the flow process, and a process for addressing that exception is not written in the flow process description document that defines the flow process under execution, dynamic switching of the flow process is executed. Specifically, the exception process to be executed is estimated and executed based on the experience gained by the flow process executing apparatus under operation from the execution of other flow processes in the past.

However, according to the conventional method as disclosed in Japanese Patent Laid-Open No. 2006-302032, a switching destination flow process is automatically determined based on the experience gained by the flow process executing apparatus from the execution of flow processes in the past. Therefore, the flow process could not be executed as intended by the user.

### SUMMARY OF THE INVENTION

It is an object of the present invention to improve the ease of use of a flow process description document.

Another object of the present invention is to make it possible to change a flow process description document according to the user's needs even if that flow process description document is not configured to be able to change processing.

According to one aspect of the present invention, there is provided a flow process execution method according to claims 1 to 4.

According to another aspect of the present invention, there is provided a flow process execution apparatus according to claims 5 to 8.

According to still another aspect of the present invention, there is provided a computer program according to claims 9 to 12.

Further features of the present invention will become apparent from the following description of exemplary embodiments with reference to the attached drawings.

### BRIEF DESCRIPTION OF THE DRAWINGS

FIG. 1 is a diagram illustrating a configuration of a system according to an embodiment of the present invention.

FIG. 2 is a diagram illustrating an example of a flow process description document that uses BPEL4WS.

FIG. 3 is a diagram illustrating the process flow of a system according to Embodiment 1 of the present invention.

FIG. 4 is a diagram illustrating a flow process invoking message that is transmitted to a flow process executing module from a flow process service user.

FIG. 5 is a diagram illustrating a result of a branch point analysis.

FIG. 6 is a diagram illustrating a switching destination flow process information description part.

FIG. 7 is a flowchart illustrating a process of dynamic switching of a flow process performed by a flow process executing module.

FIG. 8 is a diagram illustrating an example of a flow process description document.

FIG. 9 is a diagram illustrating an example of a switching definition document.

FIG. 10 is a flowchart illustrating a process performed after dynamic switching from a flow process 802 of FIG. 8 to a flow process 905 of FIG. 9 is performed.

FIG. 11 is a diagram illustrating an example in which an embodiment of the present invention is applied to a travel reservation system.

FIG. 12 is a diagram illustrating a configuration of a system according to an embodiment of the present invention.

FIG. 13 is a flowchart illustrating the process flow of a system according to an embodiment of the present invention performed under normal conditions.

FIG. 14 is a diagram illustrating an example of a flow process invoking message.

FIG. 15 is a flowchart illustrating a process flow that includes a switching branch point performed by a system according to an embodiment of the present invention.

FIG. 16 is a flowchart illustrating a process performed after dynamic switching of a flow process is executed.

FIG. 17 is a diagram schematically illustrating a configuration of a computer apparatus.

### DESCRIPTION OF THE EMBODIMENTS

Hereinafter, a preferred embodiment to which the present invention is applied shall be described in detail with reference to the accompanying drawings.

Embodiment 1 of the present invention shall be described first.

A flow process description document that uses BPEL4WS shall now be described. BPEL4WS has elements that define a flow process, such as variables, process identifiers, encapsulation of variables and process identifiers, relationships with web services, behavior when an event occurs, behavior when an exception occurs, and behavior under normal conditions. In BPEL4WS, a process unit is defined as an "activity". There are two types of activities: process activity and structure activity.

A process flow is first defined by the elements that define a flow process, and then the processes that are actually performed are written as process activities. Receiving external messages, returning responses, executing web services, data processing, queuing, signaling the occurrence of exceptions, signaling the occurrence of abnormalities, and an empty process that does not do any process are defined as the process activities.

Meanwhile, sequential processes, parallel processes, repetitions, and determinations by an external input are defined as structure activities for structuring a process flow. Process activities are written as child elements of the structure activity.

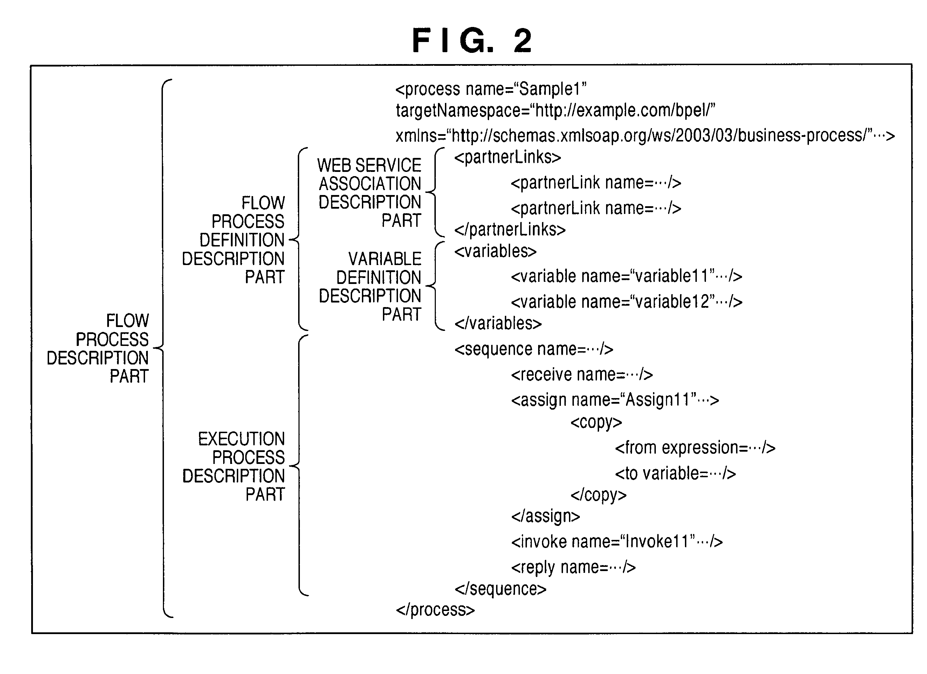

FIG. 2 is a diagram illustrating an example of a flow process description document that uses BPEL4WS.

A flow process description part of FIG. 2 represents an entire flow process description document, in which a <process> element serves as the root element. A targetNamespace attribute, which is an attribute of the <process> element, is the name space for uniquely defining the flow process description document. The flow process description part is roughly divided into two description parts: a flow process definition description part and an execution process description part.

In the flow process definition description part, elements that define various flow processes are written. Here, an association with a web service and a variable definition are written. In the web service association description part, the external relationship between the flow process description document and a process executed by the flow process is written. As the description method, a definition is made using a <partnerLinks> element. In the variable definition description part, variables used in the flow process are defined using a <variables> element.

The execution process description part is written using structure and process activities. Here, a <sequence> element, which is a structure activity that represents a sequential process, is used to define the process. A definition to receive a message from an external source is written as a <receive> element. A definition of a data process is written as an <assign> element. A definition to execute a Web service is written as an <invoke> element. A definition to send a reply is written as a <reply> element.

These <receive>, <assign>, <invoke>, and <reply> elements are written as child elements of the <sequence> element, and are defined such that they are sequentially executed from the top.

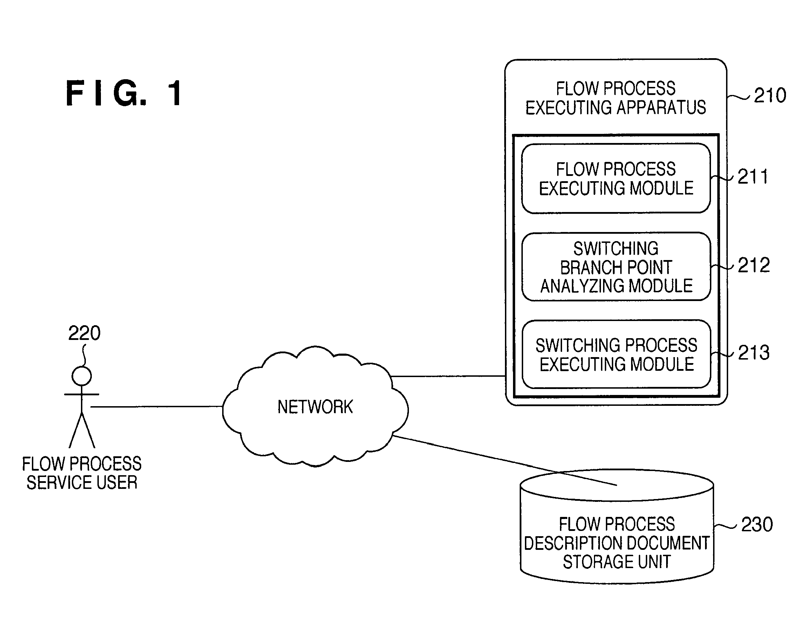

FIG. 1 is a diagram illustrating a configuration of a system according to the present embodiment.

The system according to the present embodiment is configured of a flow process executing apparatus 210, a communication terminal 220, such as a PC, that is used by a flow process service user, and a flow process description document storage unit 230, each of which is connected to a network. In the description given below, the communication terminal 220, such as a PC, used by a flow process service is referred to as "flow process service user 220". In other words, the flow process service user 220 is actually a communication terminal such as a PC, and not a human.

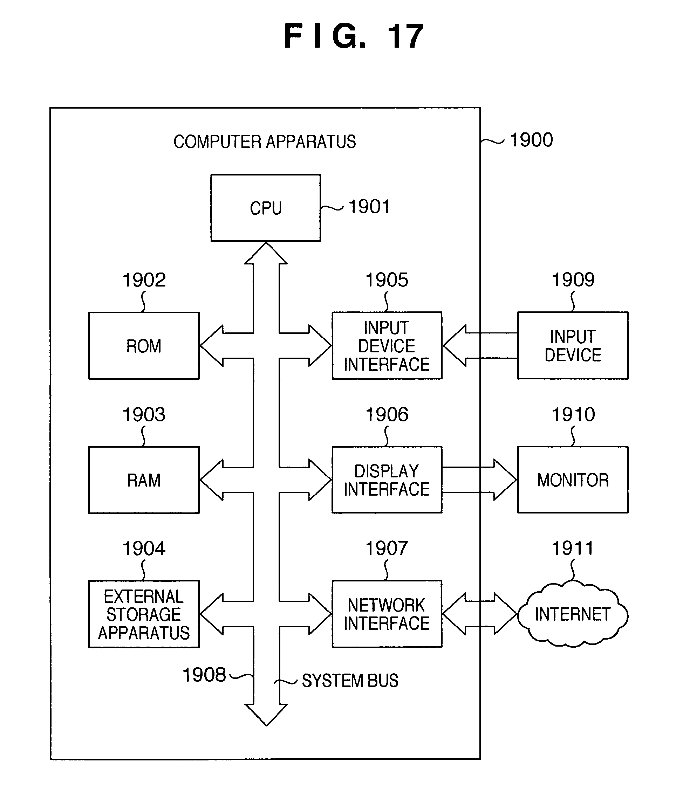

The flow process executing apparatus 210 includes a flow process executing module 211, a switching branch point analyzing module 212, and a switching process executing module 213. The flow process executing apparatus 210 is configured of a computer apparatus having a structure as shown in FIG. 17. The flow process executing module 211, the switching branch point analyzing module 212, and the switching process executing module 213 are program modules executed by this computer. The flow process executing apparatus 210 may be implemented by a single computer apparatus, or by distributing functions to a plurality of computer apparatuses as necessary. In the case of configuring with a plurality of computer apparatuses, the computer apparatuses are connected by a LAN (Local Area Network) or the like so that they can communicate with each other.

In FIG. 17, reference numeral 1901 denotes a CPU (Central Processing Unit) that controls an entire computer apparatus 1900. Reference numeral 1902 denotes a ROM (Read Only Memory) that stores programs and parameters that need not be changed. Reference numeral 1903 denotes a RAM (Random Access Memory) that temporarily stores programs and data that are supplied from an external apparatus or the like. Reference numeral 1904 denotes an external storage apparatus that is fixedly installed in the computer apparatus 1900, such as a hard disk or memory card. Examples of other suitable external storage apparatuses include a flexible disk (FD), an optical disk such as a CD (Compact Disc), a magnetic or optical card, an IC card, and a memory card, which are detachable from the computer apparatus 1900. Reference numeral 1905 denotes an interface with an input device, such as a pointing device or keyboard 1909, that inputs data through an operation of the user. Reference numeral 1906 denotes a display interface with a monitor 1910 for displaying supplied data or data stored in the computer apparatus 1900. Reference numeral 1907 denotes a network interface for connecting to a network line such as the Internet 1911. Reference numeral 1908 denotes a system bus that communicably connects the units 1901 to 1907.

The flow process executing module 211, the switching branch point analyzing module 212, and the switching process executing module 213 are programs run by the CPU 1901 of the computer apparatus 1900 shown in FIG. 17. The flow process executing module 211, the switching branch point analyzing module 212, and the switching process executing module 213 are stored in the external storage apparatus 1904, and are loaded into the RAM 1903 and executed by the CPU 1901 when necessary.

The flow process executing module 211 has a function for loading the flow process description document into a memory such as the RAM 1903 and generating a flow process definition entity, and a function for sequentially executing the flow process of the flow process definition entity. The flow process executing module 211 further has the following functions to handle the dynamic switching of the flow process. Specifically, the flow process executing module 211 has a function for pausing/resuming the flow process at any process unit in the flow process during automatic execution of the flow process, and a function for reconstructing the flow process definition entity during execution of the flow process. The flow process executing module 211 further has a function for transmitting/receiving a message that determines whether or not to switch to an external process at any process unit in the flow process.

The switching branch point analyzing module 212 has a function for analyzing the position of a branch point that is specified when commencing the execution of the flow process, and adding branch point information to the flow process definition entity, when loading the flow process description document into a memory such as the RAM 1903. The switching branch point analyzing module 212 further has a function for communicating the flow process definition entity that has been loaded into the memory in a state including the branch point information to the flow process executing module 211.

The switching process executing module 213 has a function for loading a switching destination flow process into a memory such as the RAM 1903, and generating a flow process definition entity based on a switch definition document (described later). The switching process executing module 213 also has a function for mapping the data handled in the switching source flow process to the data to be handled in the switching destination flow process, and a function for communicating the flow process definition entity of the switching destination flow process to the flow process executing module 211.

The flow process service user 220 described above is a communication terminal of a user that uses a service provided by the flow process executed by the flow process executing module 211. The service user takes on a role of determining whether or not to switch the flow process when the flow process reaches the switching branch point. The service user may implement two separate roles: a role to execute the flow process, and a role to determine whether or not to switch the flow process.

The flow process description document storage unit 230 has a function for storing the flow process description document. The flow process description document storage unit 230 is located external to the flow process executing apparatus 210, and may be connected to the flow process executing apparatus 210 directly or through a network. The flow process description document storage unit 230 may be located inside the flow process executing apparatus 210. In this case, the flow process description document storage unit 230 corresponds to the external storage apparatus 1904 of FIG. 17.

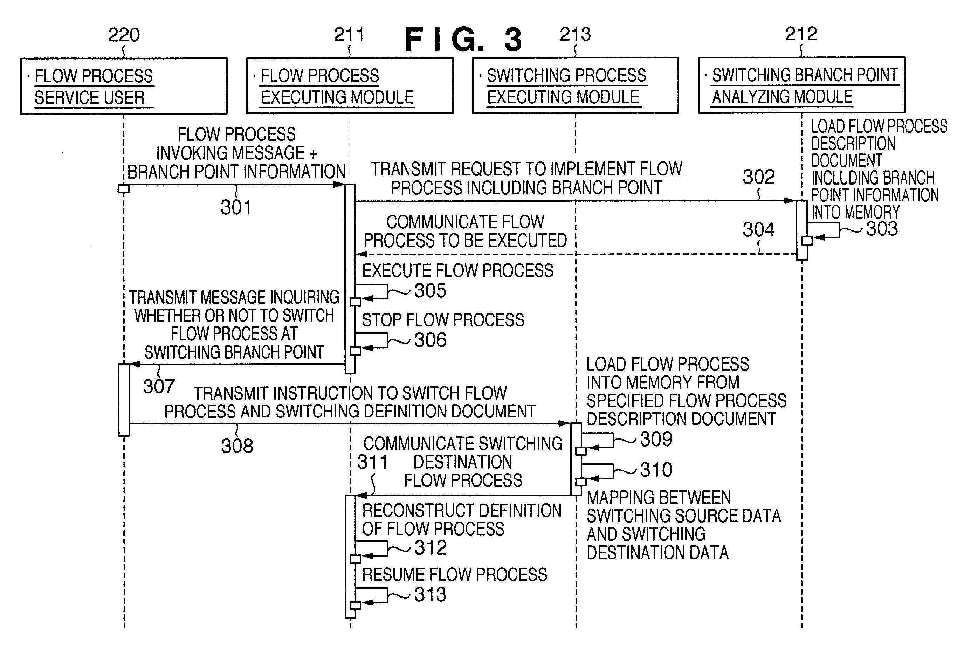

FIG. 3 is a diagram illustrating a process flow of the system according to the present embodiment. The process flow of the system according to the present embodiment shall be described with reference to FIG. 3.

First, the flow process service user 220 transmits a flow process invoking message (described later), to which branch point information has been added, to the flow process executing apparatus 210 (301). Then, the flow process executing module 211 provided in the flow process executing apparatus 210 receives the message, and transmits an execution request, which includes the branch point information that is part of the message transmitted in 301, to the switching branch point analyzing module 212 provided in the flow process executing apparatus 210 (302). A specific example of the flow process invoking message shall be described later.

The switching branch point analyzing module 212 reads out a flow process description document requested by the execution request that was received in 302. Then, based on the branch point information received in 302, the switching branch point analyzing module 212 loads the flow process description document that originally includes no branch point information in a state including the branch point information into a memory such as the RAM 1903 to generate a flow definition entity (303).

After loading the flow process description document into the memory, the switching branch point analyzing module 212 communicates the flow process to be executed, loaded into the memory in 303, to the flow process executing module 211 (304).

After that, the flow process continues to be executed by the flow process executing module 211 (305) until the process reaches the switching branch point that was specified in 301.

When the process reaches the switching branch point, the flow process executing module 211 pauses the flow process (306). Then, the flow process executing module 211 transmits a message that prompts the flow process service user 220 to determine whether or not to perform a flow switching process to the flow process service user 220 (307).

If the message indicates that the flow process is to be switched, the flow process service user 220 that has received the message transmits an instruction to switch the flow process as well as a switching definition document (described later) to the switching process executing module 213 (308). This switching definition document is written within this switch instruction, that is, within a request to link the switching source flow process to the switching destination flow process, or is specified within the request. A specific example of the switching definition document shall be described later. If the process flow is not to be switched, on the other hand, the flow process service user 220 transmits only an instruction to not switch the flow process.

The switching process executing module 213 that has received the switch instruction and the switching definition document loads the flow process into a memory such as the RAM 1903 from the specified flow process description document in accordance with the switch instruction (309).

The switching process executing module 213 then maps the data handled in the switching source flow process to the data to be handled in the switching destination based on the switching definition document received in 308 (310). This completes the preparation of the switching destination flow process, and therefore the switching process executing module 213 communicates the switching destination flow process to the flow process executing module 211 (311).

The flow process executing module 211 that has received the switching destination flow process in 311 reconstructs the flow process by linking the memory tree of the switching source flow process that had been completed before the switching source flow process is paused to the memory tree of the switching destination flow process (312). Specifically, the reconstruction of the flow process is performed by linking the switching destination flow process to the position of the switching branch point of the switching source flow process. Then, the flow process executing module 211 resumes the paused flow process (313). This completes the dynamic switching of the flow process.

If a switching definition document is already set when transmitting the flow process invoking message in 301, a flow process invoking message to which the switching definition document and the branch point information have been added may be transmitted in 301. In this case, in 307, an inquiry is made to the flow service user 220 as to whether to switch to the switching destination flow process or not to switch and continue the switching source flow process. The subsequent flow process is performed in accordance with an instruction from the flow service user 220.

It is also possible to switch to the switching destination flow process without an instruction from the flow service user 220 when the process reaches the switching branch point. In this case, it is unnecessary to make an inquiry to the flow service user 220 in 307.

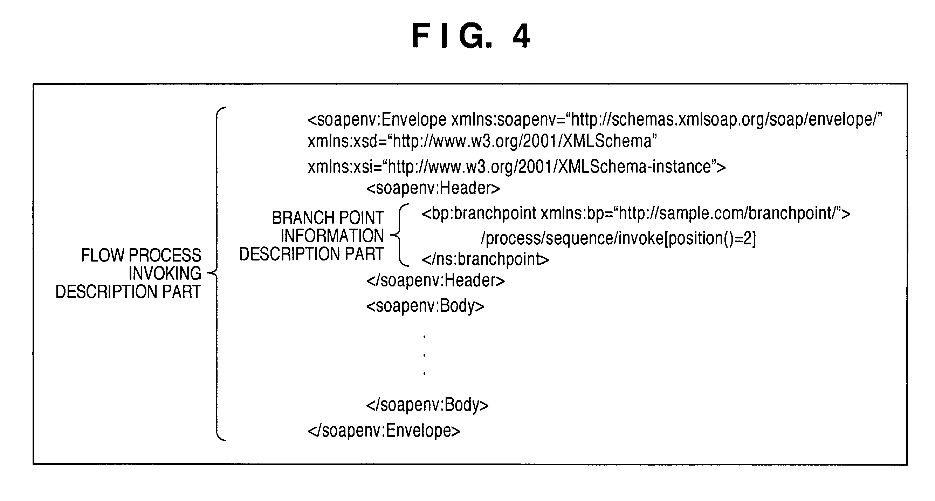

FIG. 4 is a diagram illustrating a flow process invoking message transmitted from the flow process service user 220 to the flow process executing module 211 in 301.

The flow process invoking message uses a SOAP (Simple Object Access Protocol) message. A SOAP message is a document written in XML, the entirety of which constitutes the envelope. As the child elements of the envelope, there are header and body. The specification of SOAP has been made public by the WWW consortium (W3C), and the content thereof can be viewed at http://www.w3.org/TR/SOAP.

In the flow process invoking message, branch point information is written in the header of the SOAP message, and parameters that actually invoke a flow process are stored in the body.

The branch point information of the header is written in XPath (XML Path Language). XPath is a language for specifying a given location in an XML document. Accordingly, any location can be specified within a flow process document that is written in XML. The specification of Xpath has been made public by the WWW consortium (W3C), and the content thereof can be viewed at http://www.w3.org/TR/xpath.

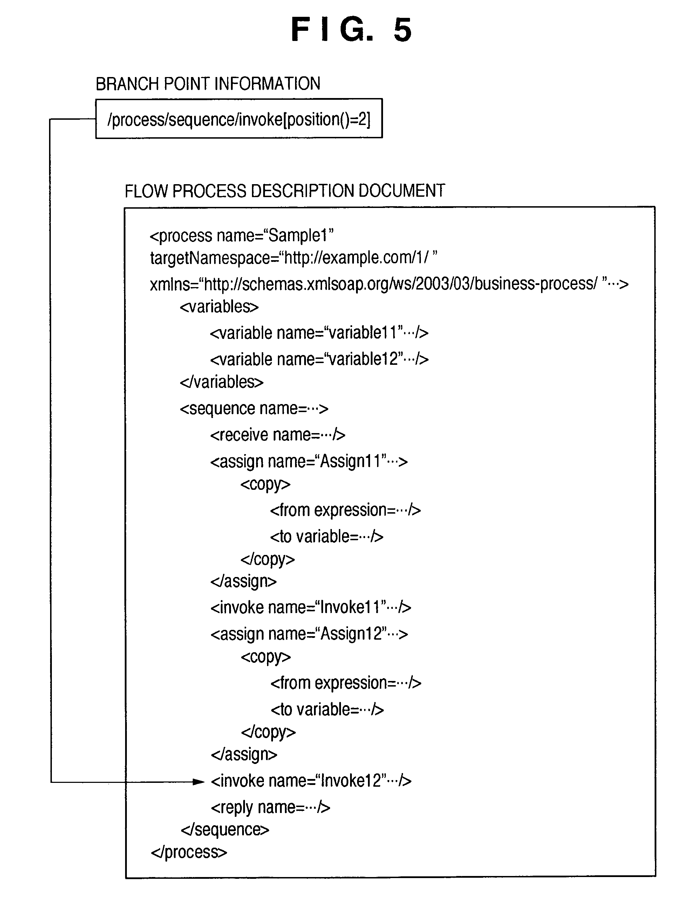

FIG. 5 is a diagram illustrating a result of a branch point analysis. In the branch point analysis method, the branch point information written in the header of the SOAP message is extracted, and the extracted information is applied to the flow process description document. The branch point information written in XPath "process/sequence/invoke[position()=2]" indicates the position of the second <invoke> element within the <sequence> element within the <process> element of the XML document. Consequently, the position of the branch point is the position shown in FIG. 5.

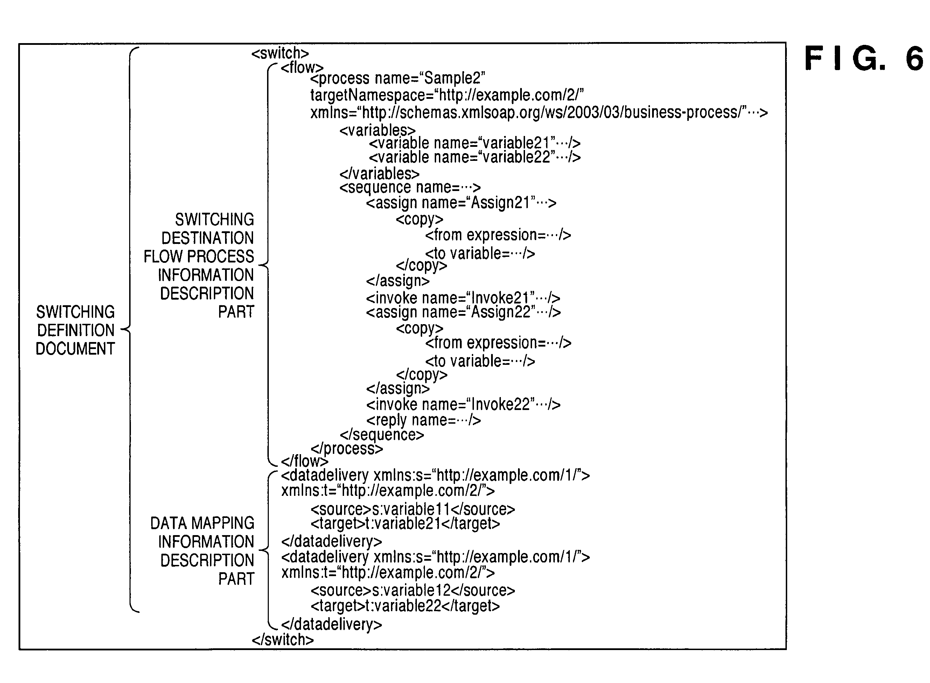

FIG. 6 is a diagram illustrating an example of a switching definition document. The switching definition document is a document that has a proprietarily defined structure and is written in XML. In the switching definition document, the root element is a <switch> element, and the <switch> element has two child elements.

The first child element of the <switch> element is a <flow> element. The <flow> element is an element for specifying a switching destination flow process description document. In this example, the switching destination flow process description document is specified by writing a new flow process description document directly within the <flow> element. However, instead of writing a flow process description document directly within the <flow> element, the flow process description document stored in the flow process description document storage unit 230 may be specified using a method with which a flow process description document can be determined uniquely, such as a URI. In this case, the switching process executing module 213 acquires a flow process description document based on a URI or the like. Note that URI is an abbreviation of "Uniform Resource Identifier".

The second child element of the <switch> element is a <datadelivery> element. The <datadelivery> element is an element for writing information regarding data mapping of variables used in the switching source and the switching destination. The number of the <datadelivery> elements written therein corresponds to the number of variables to be moved. The <datadelivery> element has, as an attribute, targetNamespace for the flow process description documents of the switching source and the switching destination. Inclusion of the targetNamespace for the flow process description documents of the switching source and the switching destination as an attribute enables the variables defined in the respective flow process description documents of the switching source and the switching destination to be specified. The <datadelivery> element has two child elements, namely, a <source> element and a <target> element. The <source> element specifies the variable of the switching source, and the <target> element specifies the variable of the switching destination.

The switching process executing module 213 identifies a switching destination flow process description document by reading out the switching definition document, enabling data mapping between the switching source flow process and the switching destination flow process.

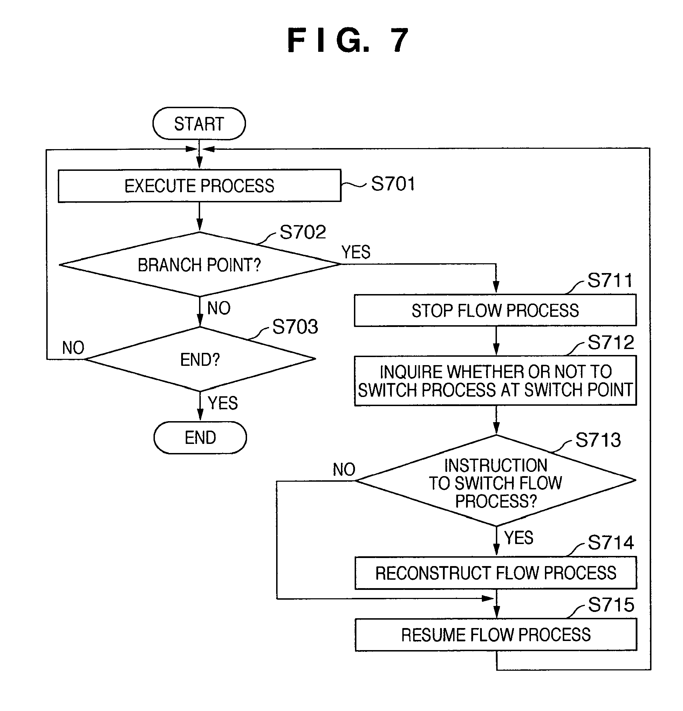

FIG. 7 is a flowchart illustrating a process of dynamic switching of the flow process performed by the flow process executing module 211.

First, in S701, the flow process executing module 211 executes the first process within the flow process. In S702, the flow process executing module 211 determines whether or not there is a branch point each time a single process ends. If there is no branch point, the process moves to S703. In S703, the flow process executing module 211 determines whether or not the flow process ends. If it is determined that the flow process ends, the flow process executing module 211 terminates the flow process. If it is determined that the flow process does not end, the flow process executing module 211 returns to S701, and executes the next process. In this manner, the flow process executing module 211 executes the processes written in the execution process description part of the flow process description part, one by one, while determining whether or not there is a branch point.

If the flow process executing module 211 determines that there is a branch point in S702, it pauses the flow process in S711. In S712, the flow process executing module 211 transmits a message to the flow process service user 220 inquiring whether or not to switch the flow process. Then, in S713, the flow process executing module 211 determines whether or not to actually switch the flow process based on the response to the message. As a result of the determination in S713, if an instruction to switch the flow process has been issued, the flow process executing module 211 reconstructs the flow process in S714, and dynamically switches the flow process.

After that, in S715, the flow process executing module 211 resumes the flow process that was paused in S711. Conversely, if no switch instruction is issued as a result of the determination in S713, the flow process executing module 211 resumes the flow process in S715 without executing the process of S714. After the flow process is resumed in S715, the process returns to S701, and the flow process executing module 211 executes the next process.

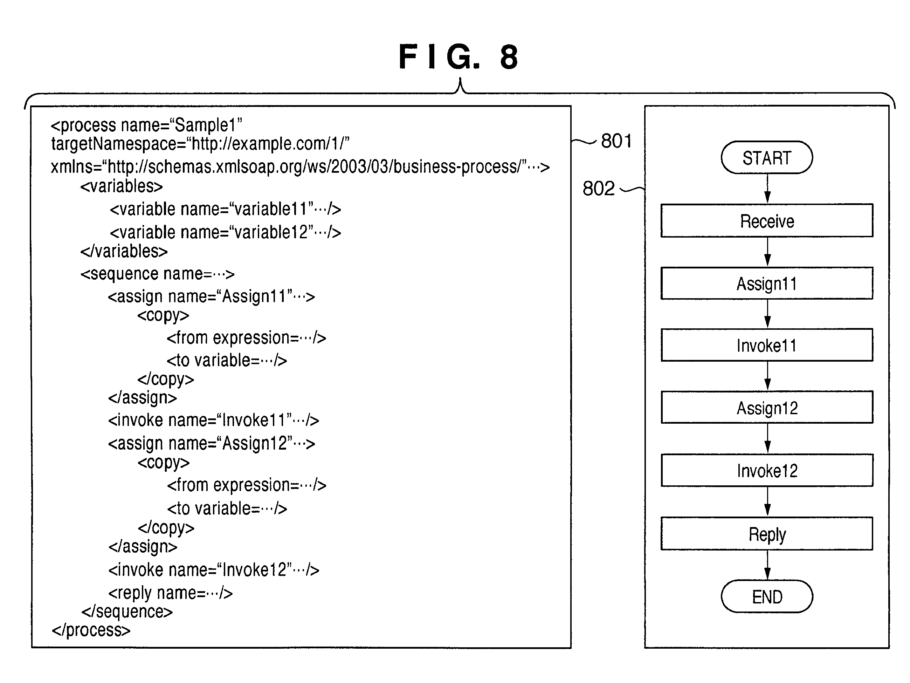

FIG. 8 is a diagram illustrating an example of a flow process description document. Reference numeral 801 denotes a flow process description document written in BPEL4WS. Reference numeral 802 illustrates the process of the flow process description document 801 as a flowchart.

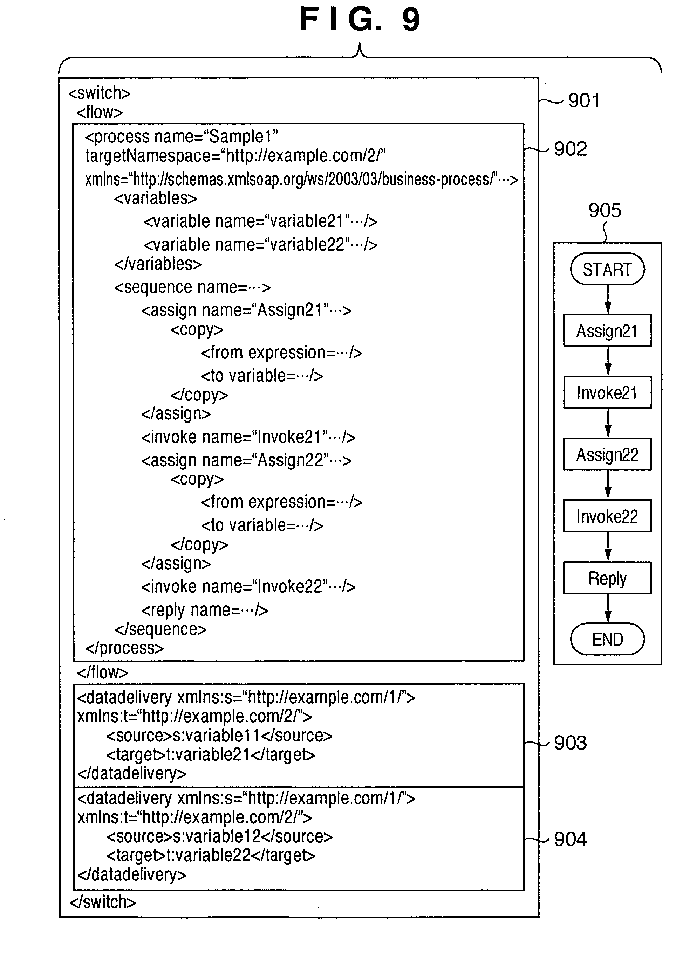

FIG. 9 is a diagram illustrating an example of a switching definition document. Reference numeral 901 denotes a switching definition document written using XML and its proprietary definition. Reference numeral 902 denotes a part that specifies a switching destination flow process in the switching definition document. The switching destination flow process 902 is written directly in BPEL4WS. Reference numeral 905 illustrates the process of the switching destination flow process description document 902 as a flowchart. Reference numerals 903 and 904 denote data mapping information.

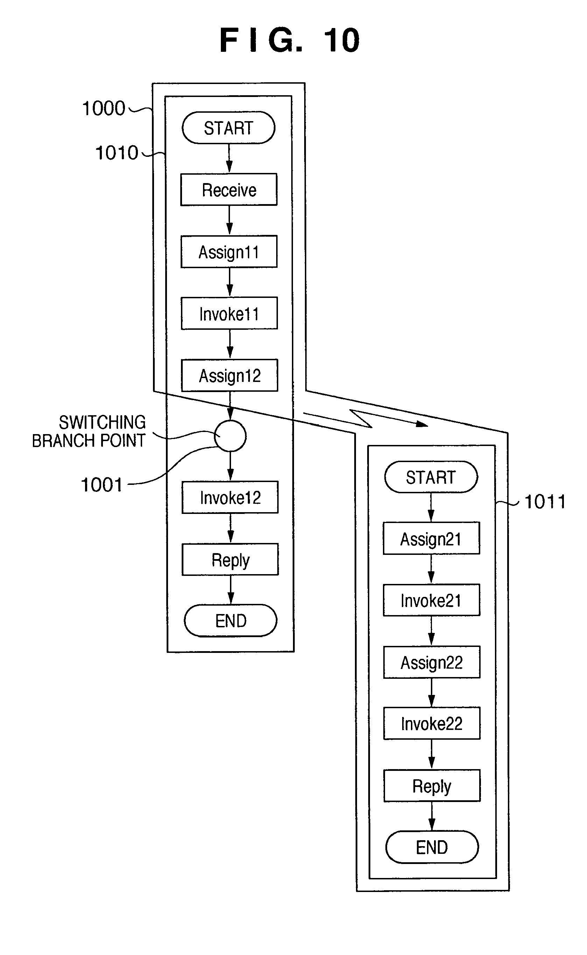

FIG. 10 is a flowchart illustrating a process performed after dynamic switching from the flow process 802 of FIG. 8 to the flow process 905 of FIG. 9 is performed.

Reference numeral 1010 denotes a flowchart, in which a switching branch point is added, obtained by providing the flowchart 802 with the branch point information "process/sequence/invoke[position()=2]". In 1010, the flow process executing module 211 executes the process sequentially, commencing from "START". When the process reaches the switching branch point 1001, the flow process executing module 211 transmits a message to the flow process service user 220 inquiring whether or not to switch the flow process. Upon receiving the message, the flow process service user 220 transmits the switching definition document indicated by 901. Then, the switching destination flow process description document indicated by 905 is implemented by the switching process executing module, which is indicated by reference numeral 1011. Alternatively, the flow process executing module 211 may read out the processes written in the execution process description part of the flow process description part one by one from the memory, and determine whether or not each read-out process is a process specified by the branch point information. If the read-out process is not a process specified by the branch point information, the flow process executing module 211 executes the read-out process.

After the switching destination flow process description document is implemented, data mapping between the switching source and the switching destination is performed using the data mapping information written within the <datadelivery> element of the switching definition document 901. Specifically, the data mapping information items 903 and 904 are used.

The <source> element written in 903 specifies the variable11 used in 1010, and the <target> element specifies the variable21 to be used in 1011. As a result, the value of the variable11 used in 1010 is copied to the value of the variable21 to be used in 1011. Similarly, based on the information 904 regarding the <source> element and the <target> element, the value of the variable12 used in 1010 is copied to the value of the variable22 used in 1011.

Then, the flow process executing apparatus 210 reconstructs the flow process 1000 based on the flow processes 1010 and 1011. As a result, the flow process 1011 is dynamically switched during the execution of the flow process 1010.

More specifically, the flow process that was processed in the order of Receive, Assign11, Invoke11, Assign12, Invoke12 and Reply is now processed in the order of Receive, Assign11, Invoke11, Assign12, Assign21, Invoke21, Assign22, Invoke22, and Reply.

An example of a travel reservation system shall be described.

In this example, a flow process service user causes a flow process based on the flow process description document to run on the flow process executing apparatus so as to execute the flow process.

Specifically, the flow process service user transmits a flow process start message including a parameter necessary to make a travel reservation to the flow process executing apparatus. Then, the flow process executing apparatus makes a flight reservation by using a flight reservation service. Subsequently, the flow process executing apparatus makes a hotel reservation by using a hotel reservation service. Finally, the flow process executing apparatus transmits the results of the flight reservation and the hotel reservation to the flow process service user.

This example assumes that the flow process description document does not include a description that invokes a rental car reservation service.

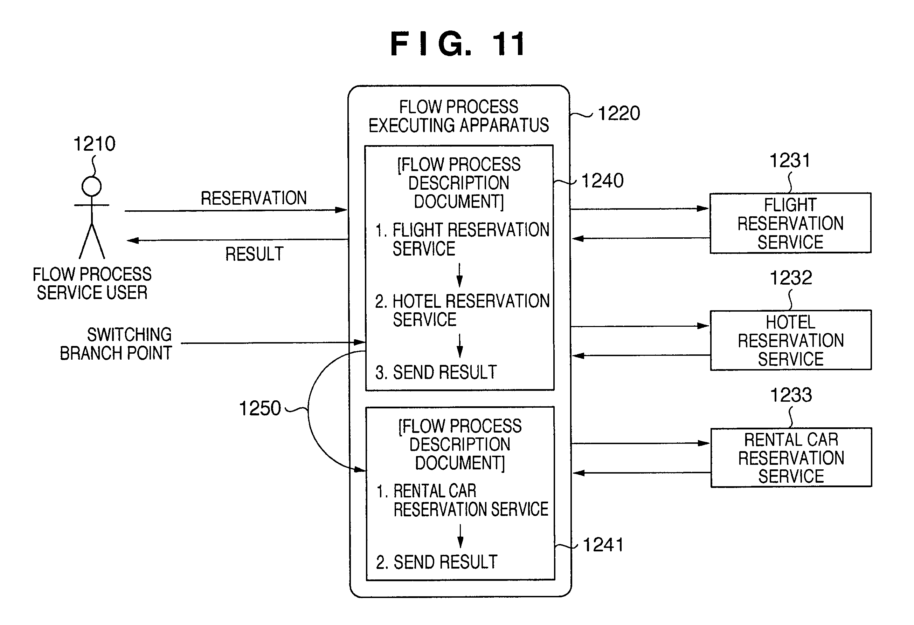

The following describes, with reference to FIG. 11, a situation in which the flow process service user 220 desires to make a rental car reservation in the flow process of the travel reservation system in which the present embodiment is applied.

If the flow process service user 1210 desires to make a rental car reservation, switching branch point specifying information that indicates the position of "3. Send Result" of a flow process description document 1240 is transmitted at the same time the flow process executing apparatus 1220 is instructed to execute the flow process description document 1240. Upon receiving the start message including the switching branch point specifying information, the flow process executing apparatus 1220 generates a flow process definition entity including the branch point information when loading the flow process description document 1240 into the memory. After that, the flow process executing apparatus 1220 executes the flow process in accordance with the flow process description document 1240. First, the flow process executing apparatus 1220 makes a flight reservation using a flight reservation service 1231, and next makes a hotel reservation using a hotel reservation service 1232. Then, the process being executed by the flow process executing apparatus 1220 reaches the switching branch point, and therefore the flow process executing apparatus 1220 transmits a message to the flow process service user 1210 inquiring whether or not to switch the flow process.

The flow process service user 1210 transmits information to perform switching together with a switching definition document that includes information regarding data mapping between the data being handled in the flow process description document 1240 and the data to be handled in the flow process description document 1241.

Upon receiving the switching definition document, the flow process executing apparatus 1220 generates a flow process definition entity for the flow process description document 1241. The flow process executing apparatus 1220 then performs data mapping between the data used when the flow process written in the flow process description document 1240 was executed and the data that is necessary to execute the flow process written in the flow process description document 1241.

Subsequently, the flow process executing apparatus 1220 dynamically switches the flow process from the flow process written in the flow process description document 1240 to the flow process written in the flow process description document 1241 as indicated by 1250. As a result, a rental car reservation can be made using a rental car reservation service 1233. Finally, the flow process executing apparatus 1220 transmits the result of the travel reservation that includes the flight reservation information, the hotel reservation information and the rental car reservation information to the flow process service user 1210.

In the above-described embodiment, BPEL4WS, serving as a service linking description language, is used as the language used to write flow process description documents, but another service linking description language such as WSCI (Web Service Choreography Interface) may be used. In this case, a language for web services that uses XML as a flow process description language is selected.

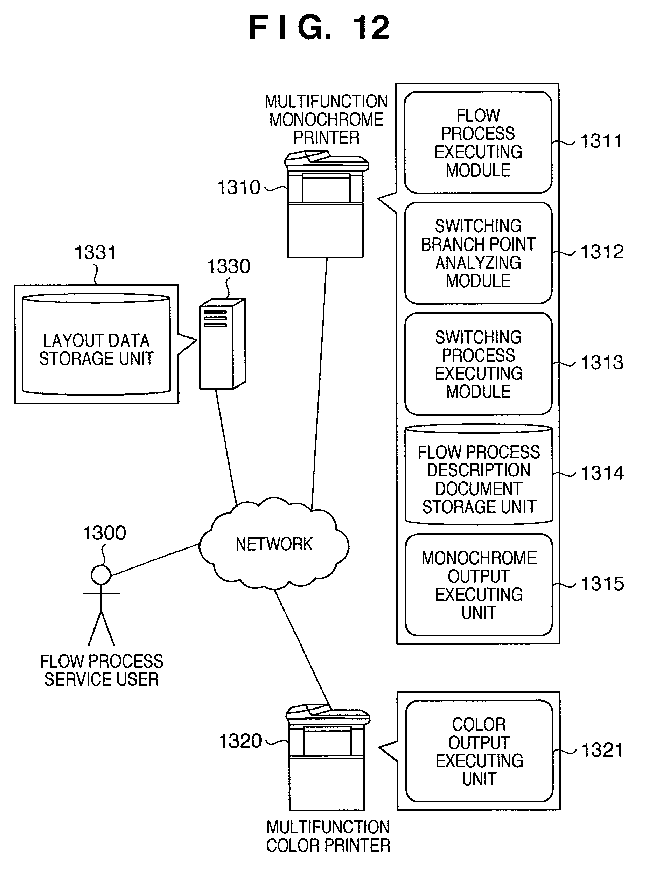

FIG. 12 is a diagram illustrating a configuration of a data output system to which the present embodiment is applied. As shown in FIG. 12, the entire system according to the present embodiment is configured of a flow process service user 1300, a multifunction monochrome printer 1310, a multifunction color printer 1320, and a data server 1330. The multifunction monochrome printer 1310 is used as a flow process executing apparatus.

The multifunction monochrome printer 1310 is provided with a flow process executing module 1311, a switching branch point analyzing module 1312, a switching process executing module 1313, a flow process description document storage unit 1314, and a monochrome output executing unit 1315. The flow process executing module 1311, the switching branch point analyzing module 1312, the switching process executing module 1313, and the monochrome output executing unit 1315 are program modules executed by the CPU of the multifunction monochrome printer 1310. The flow process executing module 1311, the switching branch point analyzing module 1312, and the switching process executing module 1313 have the same function as those of the flow process executing module 211, the switching branch point analyzing module 212, and the switching process executing module 213. The multifunction color printer 1320 is provided with a color output executing unit 1321, and the data server 1330 is provided with a layout data storage unit 1331.

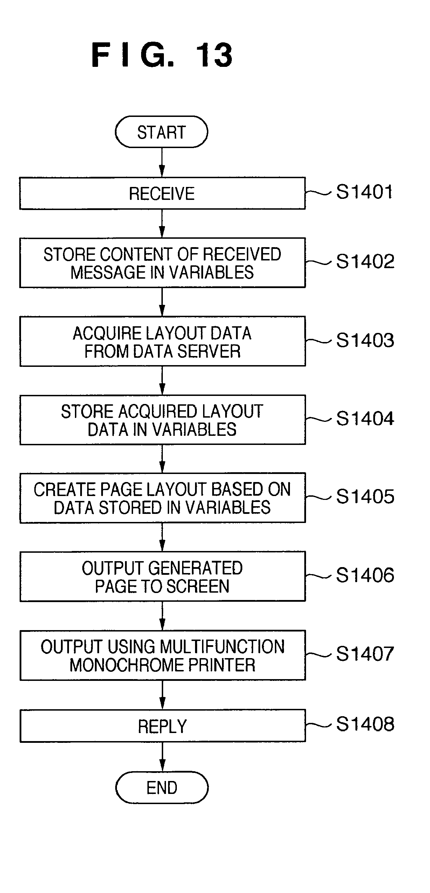

An example of dynamic switching of a flow process shall be described now using the system shown in FIG. 12. Under normal conditions, the system shown in FIG. 12 is in a state in which it can execute a flow process as shown in FIG. 13. The flow process shown in FIG. 13 illustrates the process of the above-mentioned flow process description document written in BPEL4WS as a flowchart. Under normal conditions, the flow process executing module 1311 executes the process sequentially, commencing from "START" in accordance with the flow process of FIG. 13.

First, the flow process executing module 1311 receives a message from the flow process service user 1300 as the Receive process (S1401). Then, the flow process executing module 1311 stores the data stored in the received message in variables (S1402).

Subsequently, the flow process executing module 1311 acquires layout data from the data server 1330 (S1403), and stores the data acquired from the data server 1330 in variables (S1404).

The flow process executing module 1311 then creates a page layout based on the data stored in variables (S1405). Next, the flow process executing module 1311 outputs the generated page to a screen of the multifunction monochrome printer 1310 (S1406), and prints out the page with the multifunction monochrome printer 1310 (S1407). Finally, the flow process executing module 1311 sends a replay to the flow process service user 1300 as the Reply process (S1408).

Normally, the service is implemented by invoking the flow process shown in FIG. 13 each time a request is made. The following describes a situation
in which a temporary request to output an output result with the multifunction color printer is made.

In the system according to the present embodiment, it is unnecessary to prepare a new flow process description document that includes a process of printing with the multifunction color printer to make the temporary change. It is also unnecessary to change the flow process shown in FIG. 13. A method for temporarily switching to color output in the system according to the present embodiment shall be described below.

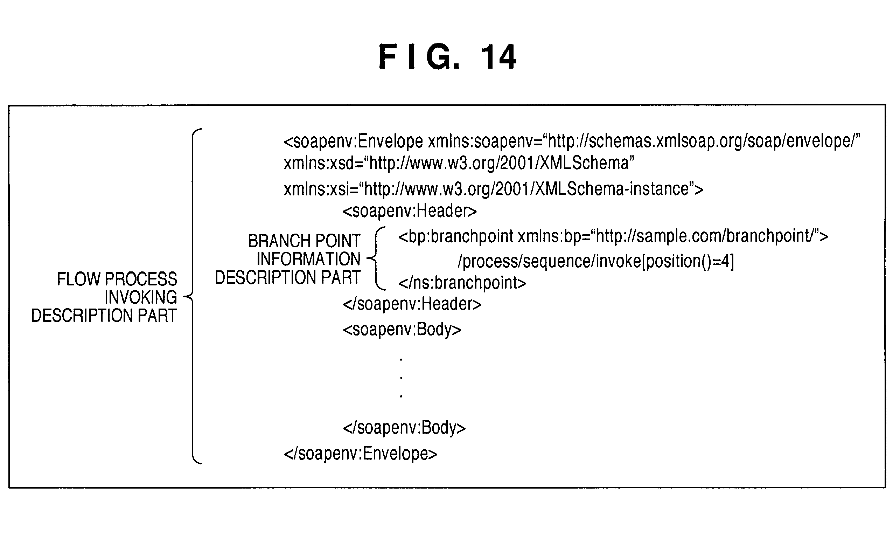

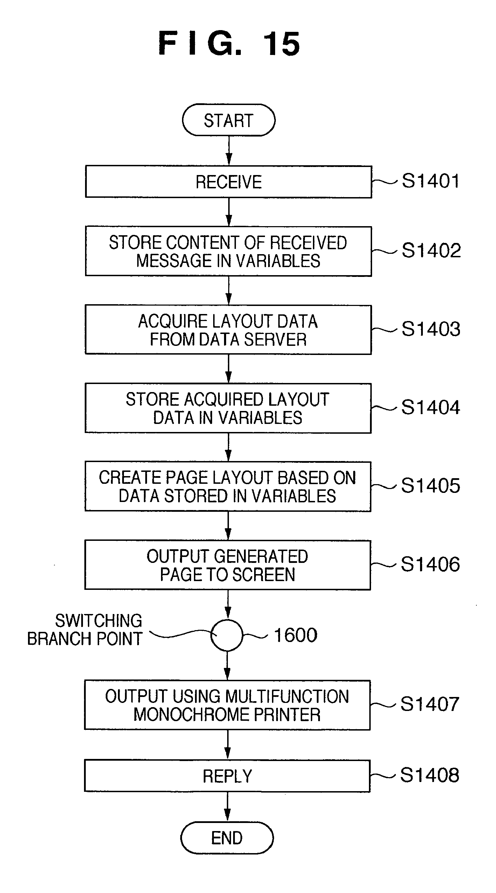

In the system according to the present embodiment, first, switching branch point information is transmitted at the same time the flow process service user 1300 transmits a flow process invoking message that invokes the flow process shown in FIG. 13. Specifically, in this example, it is necessary to switch the flow process before the process of outputting with the multifunction monochrome printer 1310. For this reason, a flow process invoking message as shown in FIG. 14 is transmitted. A switching branch point analysis is performed in the same manner as described above based on "process/sequence/invoke[position=4]" written in the branch point information description part and specify a switching branch point 1600 shown in FIG. 15. Note that in FIG. 15, the process steps to which the same reference numbers as those of FIG. 13 are assigned are executed in the same manner as those of FIG. 13.

After that, the processes are sequentially executed by the flow process executing module 1311 provided in the multifunction monochrome printer 1310 until the process reaches the switching branch point. When the process reaches the switching branch point 1600, the flow process executing module 1311 pauses the flow process being executed, and inquires with the flow process service user 1300 as to whether or not to switch the flow process.

If the flow process service user 1300 desires to switch the flow process temporarily from monochrome output to color output, the flow process service user 1300 transmits an instruction to switch the flow process and a flow process switching definition document to the switching process executing module 1313. In the flow process switching definition document configured as shown in FIG. 6, the switching destination flow process information description part specifies a flow process description document in which a process flow that includes a step of outputting using the multifunction color printer and a step of returning a response is written. Then, a data mapping process is performed between the switching source flow process document and the switching destination flow process document based on the data mapping information description part of the flow process switching definition document.

After that, the switching process executing module 1313 communicates the switching destination flow process to the flow process executing module 1311. The flow process executing module 1311 that has received the switching destination flow process reconstructs the flow process by linking the memory tree that had been completed before the switching source flow process was paused with the memory tree of the switching destination flow process. Then, the flow process executing module 1311 resumes the paused flow process. This completes the dynamic switching of the flow process.

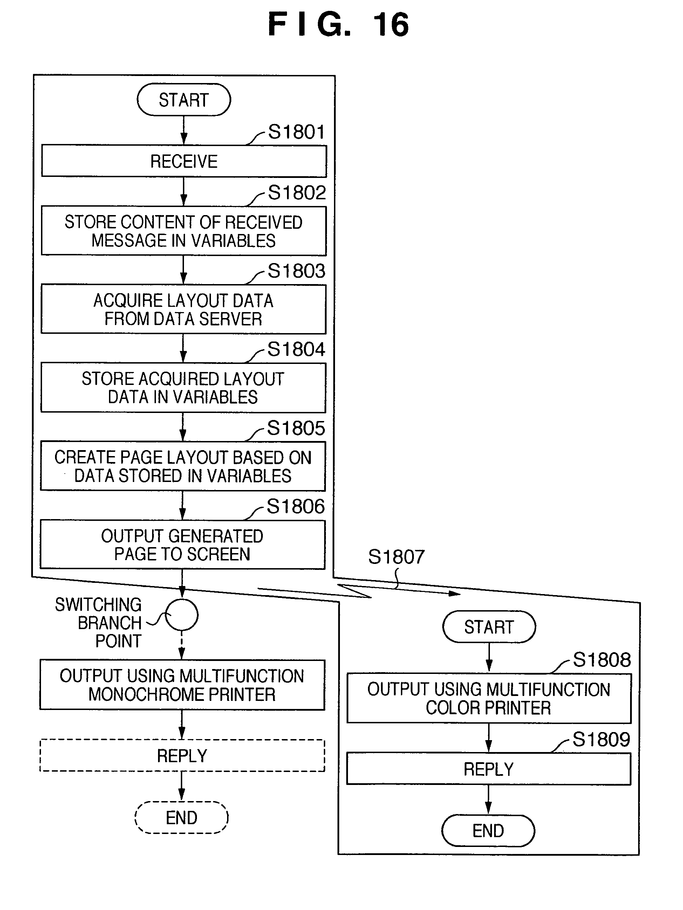

FIG. 16 is a flowchart illustrating a process performed after the dynamic switching of the flow process is executed.

Because the flow process was dynamically switched, the flow process executing module 1311 receives a message from the flow process service user 1300 as the Receive process (S1801). The subsequent steps executed by the flow process executing module 1311, namely, the steps from S1802 to S1805, are the same as the steps S1402 to S1405 of FIG. 13.

The flow process executing module 1311 outputs the generated page to a screen of the multifunction monochrome printer 1310 (S1806), performs a dynamic switching process for the flow process (S1807), and prints out the generated page with the multifunction color printer 1320 (S1808). Finally, the flow process executing module 1311 returns a reply to the flow process service user 1300 as the Reply process (S1809). As described above, in the flow process that can output only to the multifunction monochrome printer under normal conditions, it is possible to temporarily output the resultant to the multifunction color printer.

In the above-described embodiment, BPEL4WS, serving as a service linking description language, is used as the language used to write flow process description documents, but another service linking description language such as WSCI (Web Service Choreography Interface) may be used. In this case, a language for web services that uses XML as a flow process description language is selected.

The above-described embodiment makes it possible to switch to a flow process that is not written in the flow process description document. It is therefore not necessary to write all flow processes into a single flow process description document as the case with the conventional technology. Consequently, it is only necessary to prepare several flow process description documents that include more relevant processes, and it is therefore easier to reuse parts of a flow process.

The present invention is also effective in the case where a flow description cannot be changed because the writer of the flow process description document and the user are different, such as, for example, when multiple flow processes are linked and executed. According to the present invention, a switching branch point can be set in a flow process any time later and the switching destination can be specified to any flow process, and as a result, the user can change the flow process itself without rewriting the flow process description document, improving usability of flow process.

It should be noted that the object of the present invention can also be achieved by supplying a system or an apparatus with a recording medium in which software program code that realizes the function of the above-mentioned embodiment is recorded, and a computer of the system or the like loading and executing the program code stored in the recording medium.

In this case, the program code itself loaded from the recording medium realizes the function of the above-mentioned embodiment, and the present invention is configured of the program code itself and the recording medium in which the program code is stored.

Examples of recording media that can be used for supplying the program code include flexible disks, hard disks, optical disks, magneto-optical disks, CD-ROMs, CD-R, magnetic tape, non-volatile memory cards and ROMs.

The case where an operating system (OS) or the like running in a computer performs part or all of the actual processing based on the instructions of the program code loaded by the computer, and the function of the above-mentioned embodiment can be realized by that processing, is also included in the scope of the present invention.

Further, the present invention can also be applied in the case where the program code loaded from the recording medium is written into a memory provided in a function expansion unit or the like connected to the computer, a CPU or the like performs the actual processing based on the instructions of the program code, and the function of the above-mentioned embodiment is realized by that processing.

A configuration in which the program code is supplied to a computer through a communication medium such as the Internet is also included in the scope of the present invention.

While the present invention has been described with reference to exemplary embodiment, it is to be understood that the invention is not limited to the disclosed exemplary embodiment. The scope of the following claims is to be accorded the broadest interpretation so as to encompass all such modifications and equivalent structures and functions.

## Claims

1. A flow process execution method that executes, stops, and resumes a flow process, the method **characterized by** comprising:
a step (301) of receiving an instruction specifying a position in a first flow process description document;
a step (306, S711) of stopping the flow process in accordance with the first flow process description document when the process reaches the specified position during execution of the flow process in accordance with the first flow process description document; and
a step (313, S715) of resuming the stopped flow process in accordance with a second flow process description document.

2. The method according to claim 1, **characterized in that** the stopping step includes a step (308) of receiving the second flow process description document when the process reaches the specified position during execution of the flow process in accordance with the first process description document.

3. The method according to claim 1, **characterized in that** the stopping step includes a step (307, 308, S714) of selecting whether to continue the flow process in accordance with the first flow process description document or to switch to a flow process in accordance with the second flow process description document when the process reaches the specified position during execution of the flow process in accordance with the first flow process description document.

4. The method according to claim 1, **characterized in that** the resuming step includes a step (310) of mapping between data handled in the flow process in accordance with the first flow process description document and data handled in the flow process in accordance with the second flow process description document.

5. A flow process executing apparatus that has execution means (211, 1311) for executing a flow process in accordance with a flow process description document, the apparatus **characterized by** comprising:
reception means (212, 1312) for receiving an instruction specifying a position in a first flow process description document,
wherein said execution means (211, 1311) stops the flow process in accordance with the first flow process description document when the process reaches the specified position during execution of the flow process in accordance with the first flow process description document, and resumes the stopped flow process in accordance with a second flow process description document.

6. The apparatus according to claim 5, **characterized in that** said reception means receives the second flow process description document when the process reaches the specified position during execution of the flow process in accordance with the first flow process description document.

7. The apparatus according to claim 5, **characterized in that** said reception means receives a selection of whether to continue the flow process in accordance with the first flow process description document or to switch to a flow process in accordance with the second flow process description document when the process reaches the specified position during execution of the flow process in accordance with the first flow process description document.

8. The apparatus according to claim 5, **characterized in that** said execution means performs mapping between data handled in the flow process in accordance with the first flow process description document and data handled in the flow process in accordance with the second flow process description document.

9. A computer program for causing a computer to execute a flow process execution method that executes, stops, and resumes a flow process, the method **characterized by** comprising:
a step (301) of receiving an instruction specifying a position in a first flow process description document;
a step (306, S711) of stopping the flow process in accordance with the first flow process description document when the process reaches the specified position during execution of the flow process in accordance with the first flow process description document; and
a step (313, S715) of resuming the stopped flow process in accordance with a second flow process description document.

10. The computer program according to claim 9, **characterized in that** the stopping step includes a step (308) of receiving the second flow process description document when the process reaches the specified position during execution of the flow process in accordance with the first process description document.

11. The computer program according to claim 9, **characterized in that** the stopping step includes a step (307, 308, S714) of selecting whether to continue the flow process in accordance with the first flow process description document or to switch to a flow process in accordance with the second flow process description document when the process reaches the specified position during execution of the flow process in accordance with the first flow process description document.

12. The computer program according to claim 9, **characterized in that** the resuming step includes a step (310) of mapping between data handled in the flow process in accordance with the first flow process description document and data handled in the flow process in accordance with the second flow process description document.
